(19) Europäisches Patentamt

European Patent Office

Office européen des brevets

(11) **EP 1 679 928 A2**

(12) **EUROPEAN PATENT APPLICATION**

(43) Date of publication:
**12.07.2006 Bulletin 2006/28**

(51) Int Cl.:
***H04Q 7/38*** (2006.01)

(21) Application number: **06000332.4**

(22) Date of filing: **09.01.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.01.2005 US 641720 P**
**04.07.2005 KR 2005059899**

(71) Applicant: **Samsung Electronics Co., Ltd.**
**Suwon-si**
**Gyeonggi-do (KR)**

(72) Inventors:
• **Park, Chi-Hyun,**
**c/o Samsung Electronics Co., Ltd.**
**Suwon-si**
**Gyeonggi-do (KR)**
• **Do, Mi-Sun,**
**c/o Samsung Electronics Co., Ltd.**
**Suwon-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Method for determining a time for performing a vertical hand-off among IP-based heterogeneous wireless access networks**

(57) A method for determining an execution time of a VHO between base stations having different wireless interfaces in handoff among IP-based wireless access networks. The method includes: computing an execution time period of the VHO using identification information of the base stations, types of handoff protocols, a method for transferring data among the base stations, and transmission/reception mode information of an MT; computing first RSS information using the computed time period, the first RSS information representing an RSS threshold value of a home base station based on which the handoff must be performed before a link from the MT to the home base station is down; and determining the execution time of the handoff, including an initialization process for determining to perform the handoff using the first RSS information and RSS information values of the base stations.

FIG.1

EP 1 679 928 A2

**Description**

The present invention relates generally to handoff in a wireless access network, and more particularly to Vertical Hand-Off (VHO) among Internet Protocol (IP)-based wireless access networks having different wireless interfaces.

With the rapid development of wireless communication technology, demands for IP-based wireless data service is on the rise. With the technology development and the demands of market, various wireless access networks having different characteristics including capacity, speed, mobility support, etc., have been developed and commercialized. Accordingly, a multi-mode Mobile Terminal (MT) moves among wireless access networks having different wireless interfaces. Therefore, whenever a multi-mode MT moves among wireless access networks, VHO occurs.

Factors having influence on a handoff include structural environments of a cell, i.e., how wireless access networks having different wireless interfaces are connected to one another, the moving speed of a multi-mode MT, the transmission/reception mode of a multi-mode MT, types of handoff protocols used in order to support mobility among wireless access networks having different wireless interfaces when handoff is performed, the data transfer method used among networks when handoff is performed, the time point at which a multi-mode MT releases connection with a home base station when handoff is performed, etc. Herein, the execution time period and execution method of handoff may change according to various factors as described above. Hereinafter, main factors affecting the handoff will be described in more detail.

Handoff occurs because a multi-mode MT moves among networks. Accordingly, a moving speed of the MT has a great influence on a handoff. More specifically, when the MT is moving at a high speed, the time at which connection between a home base station and an MT is severed may be earlier than a time at which handoff is completed. Therefore, communication may not be smoothly performed.

When an MT is in a reception mode, a home base station must transfer data to a target base station when handoff is performed. In the reception mode, it takes longer for the home base station to transfer the data to the target base station, as compared with an MT is a transmission mode. The method by which the home base station transfers the data to the target base station includes bicasting and forwarding.

Further, when VHO is performed, the handoff protocol used to support IP mobility among wireless access networks having different wireless interfaces includes a layer 2 (L2) protocol, a Mobile Internet Protocol (MIP), and a Session Initiation Protocol (SIP). The MIP may be classified into an MIP for micro mobility and an MIP for macro mobility. In such a handoff protocol, the execution time period of handoff may change according to its types. In addition, because the execution time period of the handoff may change according to a hybrid or an integrated mobility support method or a mobility support method in an application level, delay time period of the handoff may also change.

When a handoff is performed, delay of the handoff is determined according to a time at which an MT releases connection with a home base station. That is, the MT must continuously maintain a connection with the home base station until the MT can transmit/receive data through a target base station because delay of VHO does not occur. Herein, the home base station itself may release connection with the MT or the MT itself may release connection with the home base station, but when the Received Signal Strength (RSS) value of the home base station is considerably small and a link down occurs, the release of the connection is unavoidable.

Accordingly, handoff must be performed before a minimum link down occurs. Because it is common that an MT continuously moves and cell environments, channel states, etc., change due to the movement of the MT, it is preferred to know the time period required for performing a handoff in advance and to perform the handoff based on that known time period.

As described above, there are various factors having influence on handoff. Accordingly, it is preferred to perform handoff taking all factors into consideration in order to smoothly provide a service. However, the prior art as described above does not consider various communication environments and a base station performs handoff using only an adaptive average value of handoff delay of MTs connected to the base station. Therefore, it is difficult to smoothly perform a handoff.

Accordingly, the present invention has been designed to solve the above and other problems occurring in the prior art.

It is therefore the object of the invention to provide an improved vertical handoff technique.

This object is solved by the invention as claimed in the independent claims.

Preferred embodiments are specified in the dependent claims.

It is an aspect of the present invention to provide a method by which an MT provides a base station with information of a partner base station and handoff protocol information of the MT in a VHO, in order to perform the VHO.

It is another aspect of the present invention to provide a method by which an MT receives time information required for performing a VHO from a base station, in order to determine when to perform the VHO.

It is further another aspect of the present invention to provide a method by which an MT provides a base station with information of a partner base station and handoff protocol information of the MT in VHO, and receives time information required for performing VHO from the base station in order to perform the VHO accordingly.

It is still another aspect of the present invention to provide a method by which a base station provides an MT with information of a partner base station and handoff protocol information in a VHO.

It is yet another aspect of the present invention to provide a method by which a base station provides an MT with time information required for performing VHO.

It is yet another aspect of the present invention to provide a method by which a base station provides an MT with information of a partner base station, handoff protocol information, and time information required for performing VHO in VHO, in order to perform the VHO accordingly.

In order to accomplish this, according to an aspect of the present invention, there is provided a method for determining an execution time for a vertical handoff between base stations having different wireless interfaces in a handoff among IP-based wireless access networks. The method includes the steps of: computing an execution time period of the vertical handoff using identification information of the base stations, types of handoff protocols used in order to support IP mobility by the base stations when the handoff is performed, a method for transferring data among the base stations when the handoff is performed, and transmission/reception mode information of an MT; computing, by the MT, first RSS information using the computed time period, the first RSS information representing an RSS threshold value of a home base station based on which the handoff must be performed before a link from the MT to the home base station among the base stations is down; and determining the execution time point of the handoff using both the first RSS information and RSS information values of the base stations.

The above and other objects, features, and advantages of the present invention will be more apparent from the following detailed description taken in conjunction with the accompanying drawings, in which:

FIG 1 is a diagram illustrating environments in which a mobile AP and nomadic APs are connected to different IP-based wireless access networks;

FIG 2 is a diagram illustrating environments in which a mobile AP and nomadic APs are connected to the same IP-based wireless access networks;

FIG 3 is a flow diagram illustrating a process by which an execution time of a handoff is determined and the handoff is performed according to the present invention;

FIG 4 is a flow diagram illustrating a method by which a VHO from a mobile cell to a nomadic cell is performed by a handoff request from a home base station according to an embodiment of the present invention;

FIG 5 is a flow diagram illustrating a method by which VHO from a mobile cell to a nomadic cell is performed by a handoff request from a target base station according to another embodiment of the present invention;

FIG 6 is a flow diagram illustrating a method by which VHO from a mobile cell to a nomadic cell is performed by a handoff request from an MT according to another embodiment of the present invention;

FIG 7 is a flow diagram illustrating a method by which VHO from a mobile cell to a nomadic cell is performed by a handoff request from an MT according to yet another embodiment of the present invention;

FIG 8 is a graph illustrating values of an $RSS_{VHO}$;

FIG. 9 is a detailed flow diagram illustrating the initialization processes for the handoffs illustrated in FIGs. 4 to 7;

FIG 10 is a flow diagram illustrating a method by which a VHO from a nomadic cell to a mobile cell is performed by a handoff request from an MT according to another embodiment of the present invention; and

FIG 11 is a detailed flow diagram illustrating an initialization processes for the handoff illustrated in FIG. 10.

Preferred embodiments of the present invention will be described in detail herein below with reference to the accompanying drawings. In the following description of the embodiments of the present invention, a detailed description of known functions and configurations incorporated herein will be omitted when it may obscure the subject matter of the present invention.

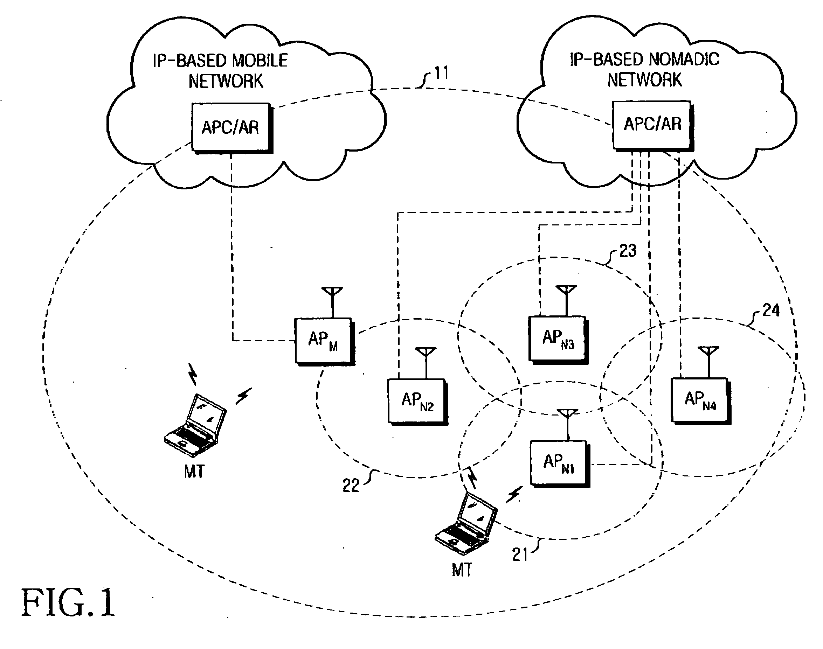

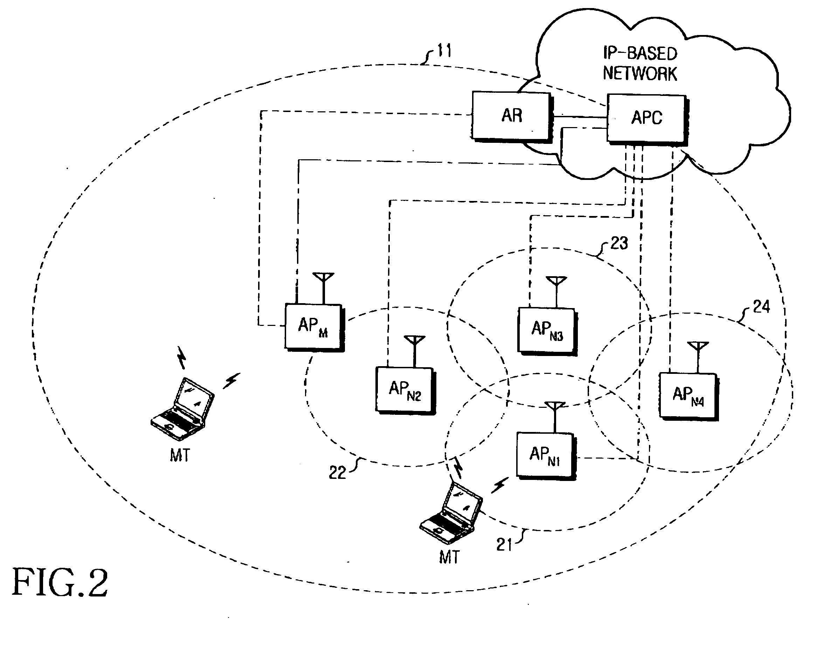

FIGs. 1 and 2 are diagrams illustrating cellular environments in which various wireless access networks overlap. More specifically, FIG 1 is a diagram illustrating environments in which a mobile Access Point (AP) $AP_M$ and nomadic APs $AP_{N1}$ to $AP_{N4}$, which are types of base stations, are connected to different IP-based wireless access networks, respectively. It can be understood that nomadic cells 21 to 24 controlled by the nomadic APs $AP_{N1}$ to $AP_{N4}$ are formed in a mobile cell 11 controlled by the mobile AP $AP_M$. Further, these cells have different mobility support schemes and data transmission characteristics.

An Access Point controller (APC) or an Access Router (AR) is a kind of Base Station controller (BSC), which manages and controls APs connected to the APC or the AR. In FIG 1, handoff between the mobile cell 11 and the nomadic cell 21 or 24 uses an L2 protocol or a Mobile Internet Protocol (MIP) for supporting micro mobility, and then uses a handoff protocol for IP mobility support such as an MIP for supporting macro mobility and a Session Initiation Protocol (SIP).

FIG 2 is a diagram illustrating environments in which a mobile AP $AP_M$ and nomadic APs $AP_{N1}$ to $AP_{N4}$ are connected to the same IP-based wireless access networks, respectively. In FIG 2, the same reference numerals are used to designate the same elements as those shown in FIG 1. FIG 2 illustrates environments in which the mobile AP

$AP_M$ and the nomadic APs $AP_{N1}$ to $AP_{N4}$ are connected to the same network provider, and thus connected to the same IP-based wireless access networks. Herein, a handoff between the mobile cell 11 and the nomadic cell 21 or 24 uses only the L2 protocol or the MIP for supporting micro mobility.

In FIGs. 1 and 2, a terminal represents a multi-mode Mobile Terminal (MT) capable of simultaneously accessing the mobile cell and the nomadic cell. In addition, it is possible to use other mobile terminals. Further, a representative base station which a terminal accesses is an AP. However, it is apparent to those skilled in the art that it is possible to use other network access device for performing the same functions as those of the AP.

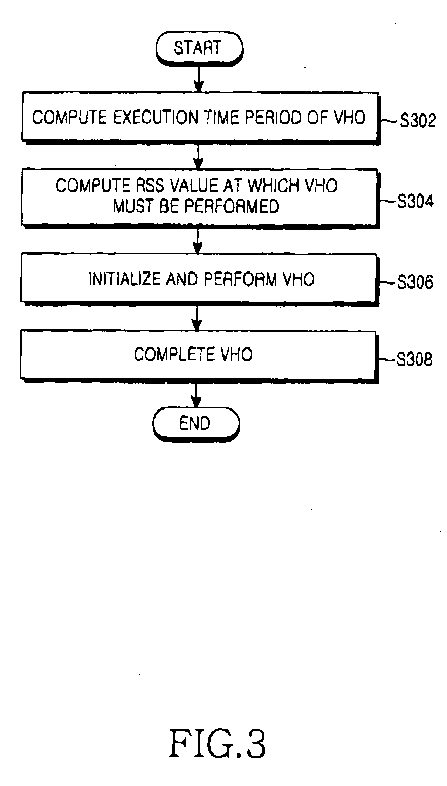

In order to smoothly perform a Vertical Hand-Off (VHO) in the cellular environments, the present invention computes the execution time period of the VHO in advance, and initiates the VHO prior to that time period, thereby preventing the VHO from being delayed. This operation will be described in more detail herein below with reference to FIG 3.

FIG. 3 is a flow diagram illustrating a process by which an execution time of a handoff is determined and the handoff is performed according to the present invention. Referring to FIG. 3, the present invention computes the execution time period of the VHO before performing the VHO in step S302. Parameters necessary for computing the time period include IDs or IP addresses of a home base station and a target base station, which perform the VHO, a bicasting or a forwarding method for transferring data from a home base station to a target base station, types of handoff protocols used in order to support IP mobility, a transmission/reception mode of an MT, etc. Herein, the base stations (e.g., the home base station and a target base station) or the MT may compute the execution time period of the VHO. This cause only a slight difference to occur in the process of collecting parameters according to places in which the VHO is performed.

The MT computes the Received Signal Strength (RSS) value, based on which the VHO must be performed, using information for the execution time period of VHO in step S304. The computed RSS value represents a threshold value, based upon which the VHO must be performed before the RSS value of the home base station including the MT approaches an RSS value at which link down of the MT occurs. That is, the MT must begin the VHO at least before the RSS value of the home base station approaches the RSS value based on which the VHO must be performed. In doing so, the VHO is completed before the link down occurs, such that communication is not interrupted and the VHO is not delayed.

After computing the RSS value based on which the VHO must be performed, the MT initializes and performs the VHO using the computed RSS value in step S306. The VHO is completed in step S308, and then all processes end.

In the VHO method as described in FIG 3, the details of the embodiment may change according to apparatuses for performing step 302. For example, a handoff execution method may change according to whether an MT requests the VHO or a base station requests the VHO. Further, a VHO among wireless access networks having different wireless interfaces includes handoff performed when an MT moves from a mobile cell to a nomadic cell, and handoff performed when an MT moves from a nomadic cell to a mobile cell, as described in FIGs. 1 and 2. Hereinafter, different embodiments of the present invention will be described in more detail in consideration of these variations.

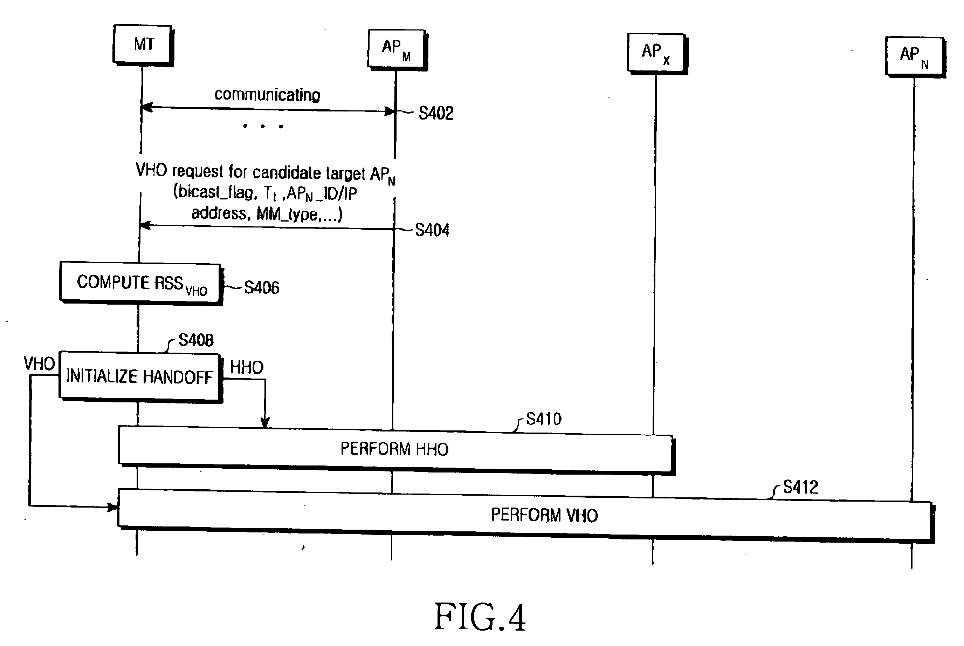

FIG 4 is a flow diagram illustrating a method in which a VHO from a mobile cell to a nomadic cell is performed by a handoff request from a home base station according to an embodiment of the present invention. In FIG 4, an MT accesses an $AP_M$, which is an AP for controlling a mobile cell, and communicates with the $AP_M$ in step S402. An $AP_X$ is a mobile AP adjacent to the $AP_M$, which is an AP having the largest RSS value among mobile APs adjacent to the $AP_M$. The MT monitors the APs adjacent to the $AP_M$ while communicating with the $AP_M$, and creates and manages a list of APs to which the MT may perform handoff. Accordingly, the MT stores information required when the MT performs handoff to $AP_X$ in advance. Because storing information is apparent to those skilled in the art, a detailed description will be omitted.

If the $AP_M$ (e.g., a home base station) determines that handoff is necessary while communicating with the MT, the $AP_M$ requests the handoff while transmitting predetermined information to the MT in step S404, wherein the predetermined information includes both an ID and an IP address ($AP_N$_ID/IP address) of an $AP_N$ (target base station) and information MM_type for types of handoff protocols used in order to support IP mobility when the $AP_M$ performs handoff to the $AP_N$. The $AP_N$ is a base station for controlling a nomadic cell. Herein, the $AP_M$ computes the execution time period $T_t$ of VHO, and transmits the computed time period to the MT together with bicasting information bicast_flag.

The time period $T_t$ represents the time period for which the MT must maintain the connection with the $AP_M$ until the MT is connected to the $AP_N$ after the VHO begins and is completed. If the bicasting information bicast_flag is true, it represents that the $AP_M$ bicasts data to the MT and the $AP_N$. However, if the bicasting information bicast_flag is false, it represents that the $AP_M$ does not bicast the data to the MT and the $AP_N$. Further, in order to compute the time period $T_t$, the bicasting information bicast_flag, data transfer time information $T_{MN}$ between the $AP_M$ and the $AP_N$, VHO signaling execution time information $T_{VHO\_signaling}$, and average data transmission time information $T_{air}$ between the $AP_N$ and the MT are required. It is preferred for the $AP_M$ to know this information in advance.

The the MT computes an $RSS_{VHO}$ using the time period $T_t$ in step S406. The $RSS_{VHO}$ represents a threshold value based on which the VHO must be performed before an RSS value of an AP (the $AP_M$) including the MT approaches an RSS value (an $RSS_{LD}$) at which link down of the MT occurs. That is, the MT must begin the VHO at least before the RSS value of the $AP_M$ approaches the $RSS_{VHO}$. Accordingly, the VHO is completed before the link down, such that communication is not interrupted and the VHO is not delayed.

The MT performs an initialization process for the handoff using the $RSS_{VHO}$ and RSS values of APs in step S408. Herein, if the MT determines that a Horizontal Hand-Off (HHO) is necessary for the handoff, the MT performs the HHO to the $AP_X$ adjacent to the $AP_M$ by means of the previously stored information in step S410. However, if the MT determines that VHO is necessary, the MT performs the VHO to the $AP_N$ in step S412. Because the detailed operations of steps 410 and 412 are apparent to those skilled in the art, a detailed description will be omitted.

As described above, if the $AP_M$ (or home base station) transmits the ID and the IP address of the $AP_N$ (or partner base station), the time period $T_t$, and the information MM_type for the types of the handoff protocols to the MT while requesting the MT to perform the handoff, the MT computes the $RSS_{VHO}$ and performs the initialization process for the VHO, thereby determining an execution time point for the VHO.

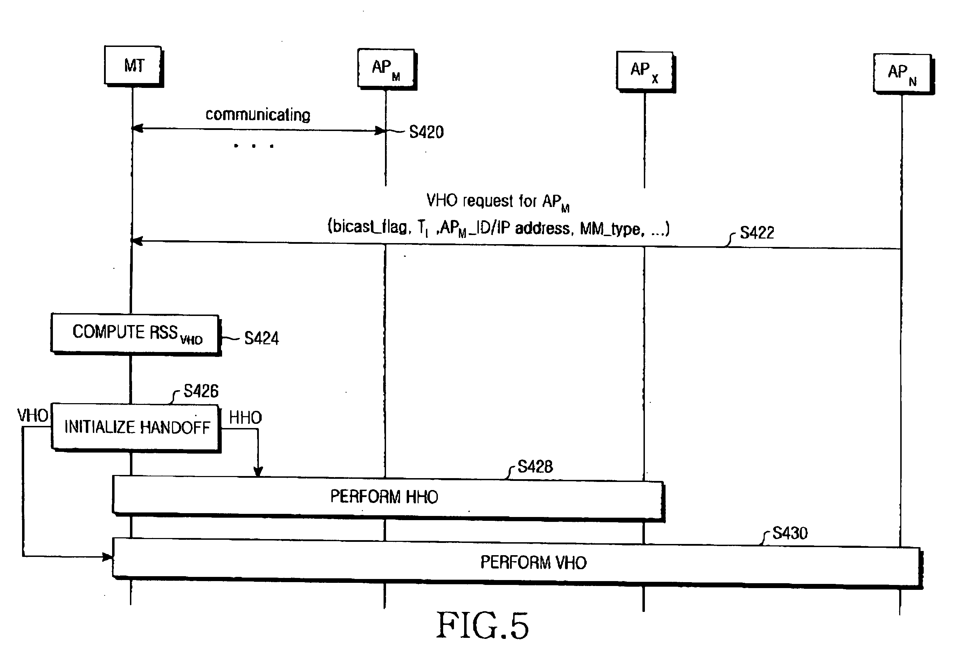

FIG 5 is a flow diagram illustrating a method by which VHO from a mobile cell to a nomadic cell is performed by a handoff request from a target base station according to another embodiment of the present invention. FIG. 5 is similar to FIG. 4, except that an $AP_N$ (target base station) transmits an ID and an IP address ($AP_{N\_}$ID/IP address) of a home base station $AP_M$ (partner base station) to an MT because the $AP_N$ requests handoff.

More specifically, in FIG 5, the MT accesses an $AP_M$, which is an AP for controlling a mobile cell, and communicates with the $AP_M$ in step S420. An $AP_X$ is a mobile AP adjacent to the $AP_M$, which is an AP having the largest RSS value among mobile APs adjacent to the $AP_M$. The MT monitors the APs adjacent to the $AP_M$ while communicating with the $AP_M$, and creates and manages a list of APs to which the MT may perform handoff. Accordingly, the MT stores information required when the MT performs handoff to $AP_X$ in advance. As indicated above, because storing information is apparent to those skilled in the art, a detailed description will be omitted.

If the $AP_N$ (target base station) determines that handoff is necessary according to new access of the MT, the $AP_N$ requests the handoff while transmitting predetermined information to the MT in step S422. The predetermined information includes both the ID and the IP address ($AP_{M\_}$ID/IP address) of the $AP_M$ (home base station) and information MM_type for types of handoff protocols used in order to support IP mobility when the $AP_N$ performs handoff to the $AP_M$. The $AP_N$ is a base station for controlling a nomadic cell. Herein, the $AP_N$ computes the execution time period $T_t$ of VHO, and transmits the computed time period to the MT together with bicasting information bicast_flag.

The time period $T_t$ represents a time period for which the MT must maintain the connection with the home base station $AP_M$ until the MT is connected to the $AP_N$ after the VHO begins and is completed. If the bicasting information bicast_flag is true, it represents that the $AP_M$ bicasts data to the MT and the $AP_N$. However, if the bicasting information bicast_flag is false, it represents that the $AP_M$ does not bicast the data to the MT and the $AP_N$. Further, in order to compute the time period $T_t$, the bicasting information bicast_flag, data transfer time information $T_{MN}$ between the $AP_M$ and the $AP_N$, VHO signaling execution time information $T_{VHO\_signaling}$, and average data transmission time information $T_{air}$ between the $AP_N$ and the MT are required. It is preferred for the $AP_M$ to know this information in advance.

The MT computes an $RSS_{VHO}$ using the time period $T_t$ in step S424. The $RSS_{VHO}$ represents a threshold value based on which the VHO must be performed before an RSS value of an AP (the $AP_M$) including the MT approaches an RSS value (an $RSS_{LD}$) at which link down of the MT occurs. That is, the MT must begin the VHO at least before the RSS value of the $AP_M$ approaches the $RSS_{VHO}$. In doing so, the VHO is completed before the link down, such that communication is not interrupted and the VHO is not delayed.

The MT performs an initialization process for the handoff using the $RSS_{VHO}$ and RSS values of APs in step S426. Herein, if the MT determines that a Horizontal Hand-Off (HHO) is necessary for the handoff, the MT performs the HHO to the $AP_X$ adjacent to the $AP_M$ by means of the previously stored information in step S428. However, if the MT determines that VHO is necessary, the MT performs the VHO to the $AP_N$ (S430). Because the detailed operations of steps 428 and 430 are apparent to those skilled in the art, a detailed description will be omitted.

As described above, if the $AP_N$ (target base station) transmits the ID and the IP address of the $AP_M$ (partner base station), the time period $T_t$, and the information MM_type for the types of the handoff protocols to the MT while requesting the MT to perform the handoff, the MT computes the $RSS_{VHO}$ and performs the initialization process for the VHO, thereby determining an execution time point for the VHO.

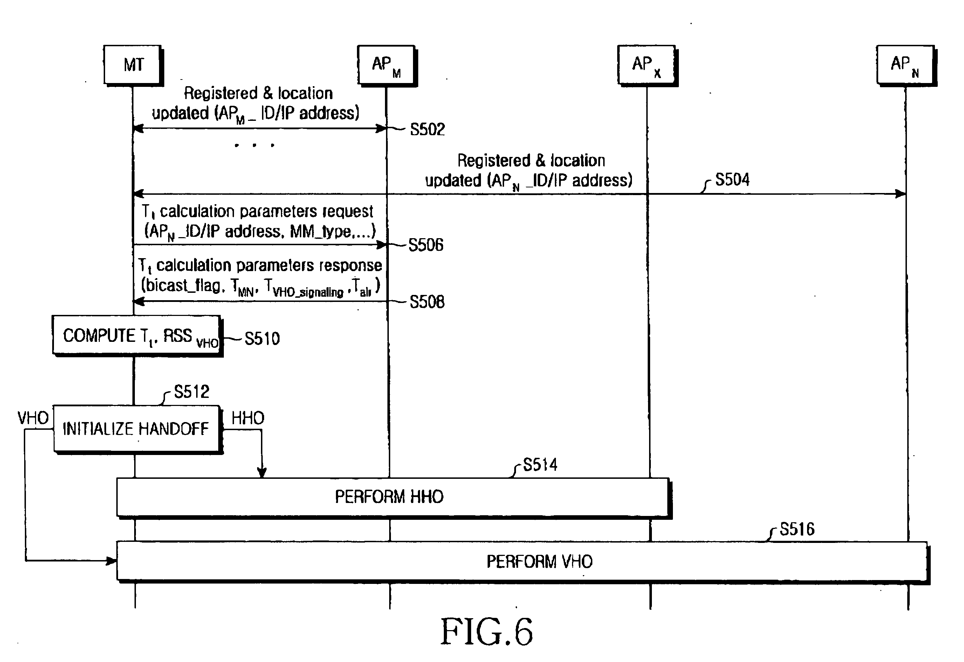

FIG 6 is a flow diagram illustrating a method by which the VHO from the mobile cell to the nomadic cell is performed by a handoff request from the MT according to another embodiment of the present invention. In FIG. 6, the MT accesses an $AP_M$, which is an AP for controlling the mobile cell, and communicates with the $AP_M$. Thereafter, the MT moves to the nomadic cell, accesses an $AP_N$, which is an AP for controlling the nomadic cell, and communicates with the $AP_N$. That is, the $AP_M$ is a home base station and the $AP_N$ is a target base station.

The MT performs a registration procedure, a location registration, etc., for the $AP_M$, receives an ID and an IP address ($AP_{M\_}$ID/IP address) of the $AP_M$, and communicates with the $AP_M$ by means of the received information in step S502. An $AP_X$ is a mobile AP adjacent to the $AP_M$, which is an AP having the largest RSS value among mobile APs adjacent to the $AP_M$. The MT monitors the APs adjacent to the $AP_M$ while communicating with the $AP_M$, and creates and manages a list of APs to which the MT may perform handoff. Accordingly, the MT stores information required when the MT performs handoff to $AP_X$ in advance. Because storing information is apparent to those skilled in the art, a detailed description will be omitted.

If the MT moves to the nomadic cell while communicating with the $AP_M$, the MT performs a registration procedure, a location registration, etc., for the $AP_N$ for controlling the nomadic cell, and receives an ID and an IP address ($AP_N$_ID/IP address) of the $AP_N$ in step S504.

The MT requests the $AP_M$ to transmit parameters necessary for computing the execution time period $T_t$ of VHO in step S506. The time period $T_t$ represents a time period for which the MT must maintain the connection with the $AP_M$ until the MT is connected to the $AP_N$ after the VHO begins and is completed. When the MT requests the $AP_M$ to transmit the parameters necessary for computing the time period $T_t$, the MT transmits both the ID and the IP address ($AP_N$_ID/IP address) of the $AP_N$ received in step 504 and information MM_type for types of handoff protocols to the $AP_M$.

The $AP_M$ transmits a response message to the MT, which includes bicasting information bicast_flag, data transfer time information $T_{MN}$ between the $AP_M$ and the $AP_N$, VHO signaling execution time information $T_{VHO\_signaling}$, and average data transmission time information $T_{air}$ between the $AP_N$ and the MT in step S508. If the bicasting information bicast_flag is true, it represents that the $AP_M$ bicasts data to the MT and the $AP_N$. However, if the bicasting information bicast_flag is false, it represents that the $AP_M$ does not bicast the data to the MT and the $AP_N$. The $T_{MN}$ represents data transfer time between the $AP_M$ and the $AP_N$ when the $AP_M$ bicasts the data to the MT and the $AP_N$. The $T_{VHO\_signaling}$ represents VHO signaling execution time according to whether an L2 protocol, an MIP for supporting micro mobility, an MIP for supporting macro mobility, or an SIP is used, or whether a hybrid or an integrated mobility support method, or a mobility support method in an application level is used, when the VHO is performed.

The MT computes the time period $T_t$ using the information received in step S508, and computes an $RSS_{VHO}$ using the time period $T_t$ in step S510. The $RSS_{VHO}$ represents a threshold value based on which the VHO must be performed before an RSS value of an AP (the $AP_M$) including the MT approaches an RSS value (an $RSS_{LD}$) at which link down of the MT occurs. That is, the MT must begin the VHO at least before the RSS value of the $AP_M$ approaches the $RSS_{VHO}$. Accordingly, the VHO is completed before the link down occurs, such that communication is not interrupted and the VHO is not delayed.

The MT performs an initialization process for the handoff using the $RSS_{VHO}$ and RSS values of APs in step S512. Herein, if the MT determines that an HHO is necessary for the handoff, the MT performs the HHO to the $AP_x$ adjacent to the $AP_M$ using the previously stored information in step S514. However, if the MT determines that a VHO is necessary, the MT performs the VHO to the $AP_N$ in step S516.

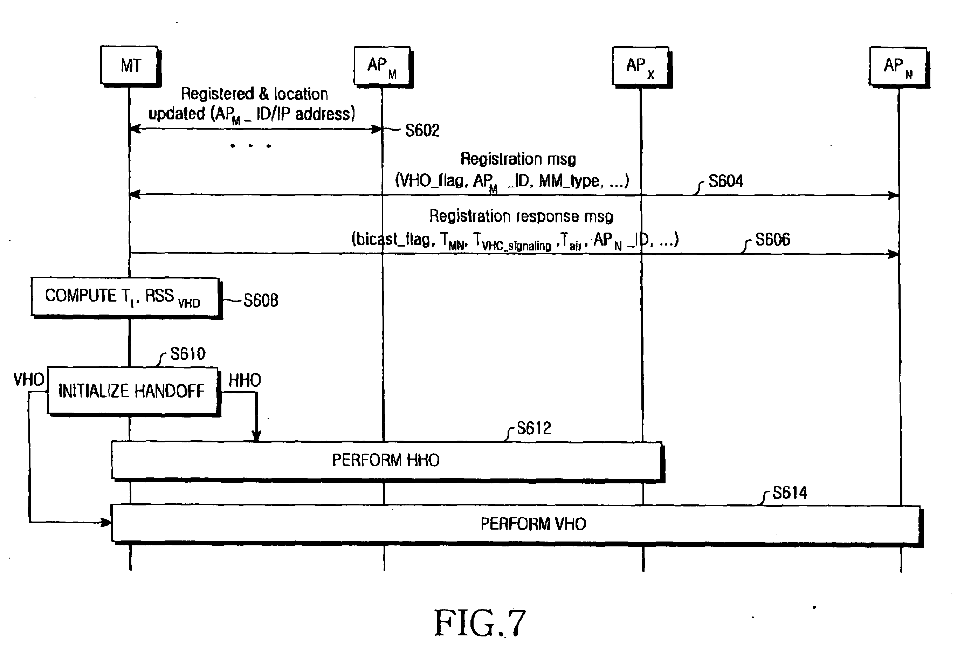

In FIG. 6, the MT receives the parameters necessary for the handoff from the $AP_M$. However, as illustrated in FIG. 7, an MT may also receive the parameters necessary for the handoff from the $AP_N$ (target base station). Hereinafter, FIG 7 will be described in more detail.

Referring to FIG 7, the MT performs a registration procedure, a location registration, etc., for an $AP_M$, receives an ID and an IP address ($AP_M$_ID/IP address) of the $AP_M$, and communicates with the $AP_M$ using the received information in step S602. As described in FIG 6, an $AP_x$ is a mobile AP adjacent to the $AP_M$, which is an AP having the largest RSS value among mobile APs adjacent to the $AP_M$. The MT monitors the APs adjacent to the $AP_M$ while communicating with the $AP_M$, and creates and manages a list of APs to which the MT may perform handoff. Accordingly, the MT stores information required when the MT performs handoff to $AP_X$ in advance. Because storing information is apparent to those skilled in the art, a detailed description will be omitted.

If the MT moves to a nomadic cell while communicating with the $AP_M$, the MT transmits a registration message used for a registration procedure, a location registration, etc., to an $AP_N$ for controlling the nomadic cell in step S604. The registration message includes a VHO_flag, an ID and an IP address ($AP_M$_ID/IP address) of the $AP_M$, and information MM_type for types of handoff protocols, differently from a general registration message.

Typically, an MT attempts connection to a nomadic AP in the following three cases: an MT accesses a nomadic AP for a first time; an MT performs inter-handoff between nomadic APs; and an MT performs handoff to a nomadic AP from a mobile AP. The VHO_flag is a flag that represents the MT performing the handoff to the nomadic AP from the mobile AP.

The $AP_N$ inserts bicasting information bicast_flag, data transfer time information $T_{MN}$ between the $AP_M$ and the $AP_N$, VHO signaling execution time information $T_{VHO\_signaling}$, and average data transmission time information $T_{air}$ between the $AP_N$ and the MT, which are necessary for computing the execution time period $T_t$ of VHO, into a registration response message including an ID and an IP address ($AP_N$_ID/IP address) of the $AP_N$, and transmits the registration response message to the MT in step S606.

The MT computes the time period $T_t$ using the information received in step S606, and computes an $RSS_{VHO}$ by means of the time period $T_t$ in step S608. Further, the MT performs an initialization process for the handoff using the $RSS_{VHO}$ and RSS values of APs in step S610. Herein, if the MT determines that an HHO is necessary for the handoff, the MT performs the HHO to the $AP_X$ adjacent to the $AP_M$ using the previously stored information in step S612. However, if the MT determines that a VHO is necessary, the MT performs the VHO to the $AP_N$ in step S614.

Hereinafter, a process for computing the time period $T_t$ and the $RSS_{VHO}$ in FIGs. 4 to 7 will be described in detail.

As indicated above, the time period $T_t$ is computed differently, depending on the transmission/reception mode (a reception mode or a transmission mode) of the MT, the information MM_type for types of handoff protocols, and the bicasting information bicast_flag.

First, a case in which the transmission/reception mode of the MT is a reception mode will be described.

When handing off using the L2 protocol, if the bicast_flag is true, the $T_t = (T_{MN} + T_{air})$. However, if the bicast_flag is false, the $T_t = (T_{VHO\_signaling} + T_{air})$.

Further, when handing off using the MIP for supporting macro mobility or the SIP, if the bicast_flag is true, the $T_t = (T_{MN} + T_{air})$. However, if the bicast_flag is false, the $T_t = (T_{VHO\_signaling} + T_{air})$. These equations are the same as those in the handoff using the L2 protocol. However, because the $T_{VHO\_signaling}$ has different values, the results are also different.

$T_t$, when the MT is in the reception mode, may be defined as shown in Equation (1) below.

$$T_t = \text{Max} \{a\, T_{MN} + (1\text{-}a)\, T_{VHO\_signaling} + T_{air}, T\} \quad \ldots\ldots(1)$$

In Equation (1), if the bicast_flag is true, the constant a has a value of 1. Otherwise, the constant a has a value of 0. T represents an average value for execution time periods of an HHO.

$T_t$, when the transmission/reception mode of the MT is a transmission mode, may be defined as shown in Equation (2) below.

$$T_t = \text{Max} \{ T_{VHO\_signaling} + T_{air}, T\} \quad \ldots\ldots(2)$$

When the MT is in the transmission mode, the MT is not affected by the bicasting information bicast_flag.

Further, the $RSS_{VHO}$ is computed by using the calculated $T_t$ as expressed by Equation (3).

$$RSS_{VHO} = \delta \quad T_t / T_{measureperiod} + RSS_{LD} \quad \ldots\ldots(3)$$

In Equation (3), the $T_{measureperiod}$ represents a computation period of an average value for RSS measured values, and the $\delta$ represents variation of an RSS value during the $T_{measureperiod}$ interval.

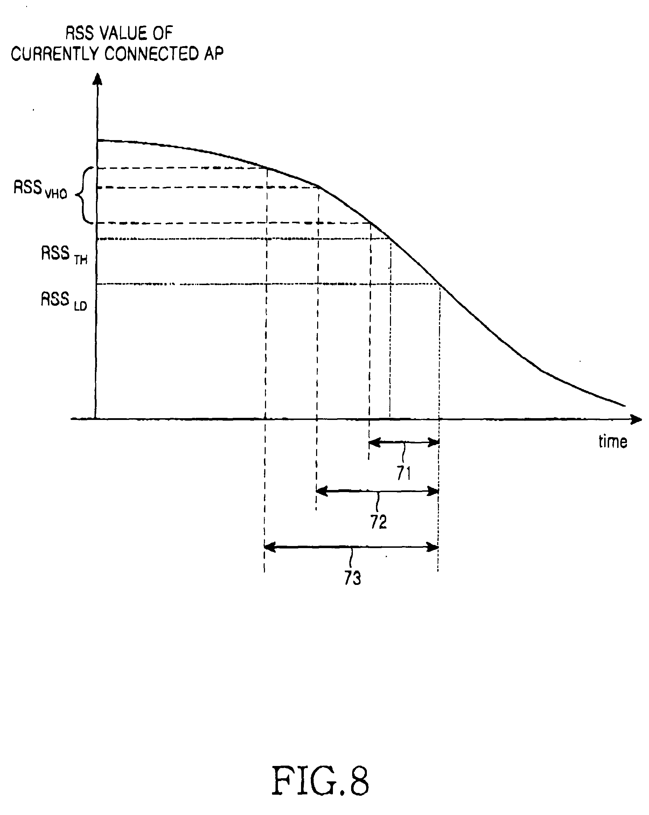

FIG 8 is a graph illustrating values of the $RSS_{VHO}$. When the MT is in a reception mode and the handoff uses the L2 protocol, $T_t$ is the shortest period as illustrated by reference number 71. Accordingly, the $RSS_{VHO}$ has a relatively small value. However, when the MT is in a reception mode and the handoff uses the MIP for supporting macro mobility or the SIP, $T_t$ is longer than the period of reference number 71 by a time period for which the MIP or the SIP is used, as illustrated by reference number 72. Accordingly, the $RSS_{VHO}$ has a value relatively larger than when performing a handoff using the L2 protocol.

Further, when the MT is in the transmission mode, a time period for which the MT must maintain connection with the existing AP becomes relatively longer because the AP does not bicast data. Reference number 73 represents the $T_t$ corresponding to this case. Accordingly, the $RSS_{VHO}$ has a larger value than any other cases.

To summarize, the MT must begin the handoff before the RSS value of an AP including the MT approaches the $RSS_{VHO}$. In all cases described above, the $RSS_{VHO}$ is larger than the $RSS_{TH}$. The $RSS_{TH}$ represents a threshold value based on which the HHO must be performed before the RSS value of the AP (the $AP_M$) including the MT approaches an RSS value (an $RSS_{LD}$) at which link down of the MT occurs. That is, because every VHO has an execution time period longer than that of the HHO, the $RSS_{VHO}$ is larger than the $RSS_{TH}$.

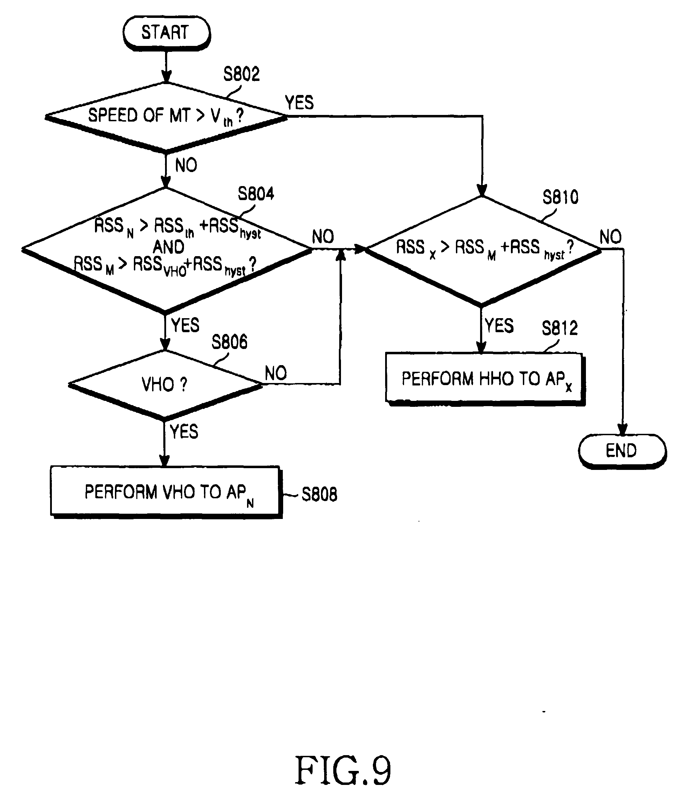

FIG. 9 is a detailed flow diagram illustrating the initialization processes for the handoffs illustrated in FIGs. 4 to 7. Referring to FIG. 9, the MT determines if its own speed is larger than a threshold value ($V_{th}$) of speed in step S802. If the MT has a speed lower than the $V_{th}$, the MT compares the current RSS value ($RSS_M$) of the $AP_M$, the current RSS value ($RSS_N$) of the $AP_N$, the $RSS_{TH}$, and the $RSS_{VHO}$ to one another in step S804. The $RSS_{TH}$ represents a minimum RSS threshold value at which the MT can newly access the $AP_N$ (target base station) and communicate with the $AP_N$, instead of a threshold value based on which the HHO must be performed before a link from the MT to the $AP_M$ (home base station) is down as described in FIG 8.

More specifically, the MT determines if $RSS_N$ is larger than ($RSS_{TH} + RSS_{hyst}$) and $RSS_M$ is larger than ($RSS_{VHO} + RSS_{hyst}$). The $RSS_{hyst}$ represents an RSS value corresponding to hyteresis of the HHO, which signifies a margin value required until the HHO is actually performed after the HHO execution command. That is, the MT determines if the MT can access the target base station and communicate with the target base station, and determines if there is enough margin for performing handoff to the home base station.

If $RSS_N$ is larger than ($RSS_{TH}$ + $RSS_{hyst}$) and $RSS_M$ is larger than ($RSS_{VHO}$ + $RSS_{hyst}$), the MT determines whether to perform the VHO in step S806. If the MT determines that it is necessary to perform the VHO, the MT performs the VHO to the $AP_N$ in step S808. Herein, step S808 represents step S412 in FIG. 4, step S430 in FIG 5, step S516 in FIG. 6, and step S614 in FIG 7.

If the MT has a speed higher than the $V_{th}$ in step S802, and if $RSS_N$ is not larger than ($RSS_{TH}$ + $RSS_{hyst}$) and $RSS_M$ is not larger than ($RSS_{VHO}$ + $RSS_{hyst}$) in step S804, the MT compares the current RSS value ($RSS_X$) of the $AP_X$ adjacent to the $AP_M$ with the $RSS_M$ in step S810. If $RSS_X$ is larger than ($RSS_M$ + $RSS_{hyst}$), the MT performs the HHO to the $AP_X$ in step S812. Herein, step S812 represents step S410 in FIG 4, step S428 in FIG 5, step S514 in FIG 6 and step S612 in FIG 7.

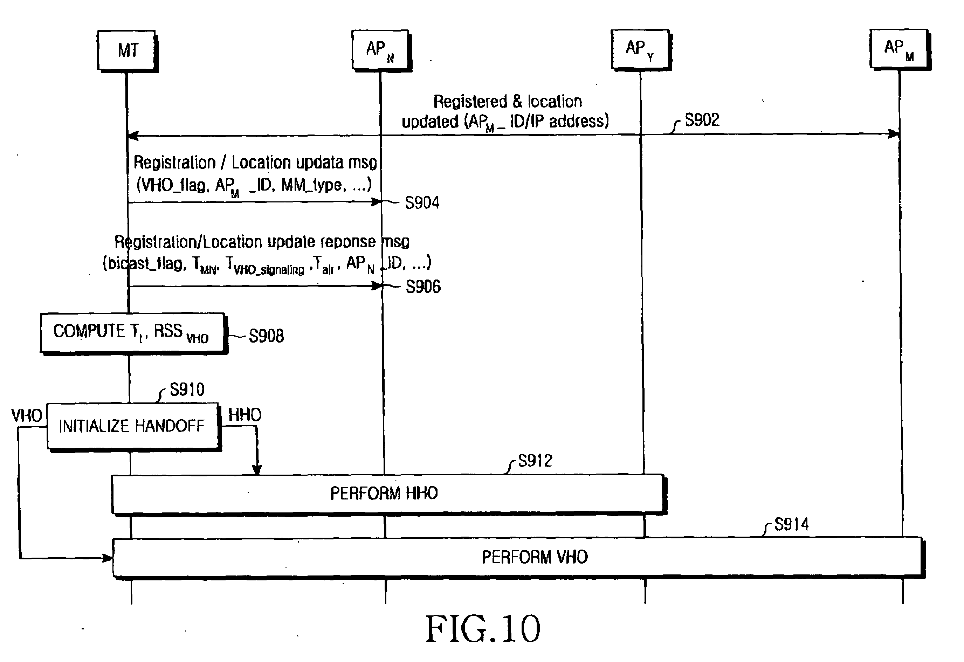

FIG 10 is a flow diagram illustrating a method by which the VHO from the nomadic cell to the mobile cell is performed by a handoff request from an MT according to another embodiment of the present invention. In FIG. 10, the MT accesses an $AP_N$, which is an AP for controlling the nomadic cell, and communicates with the $AP_N$. The MT moves to the mobile cell, accesses an $AP_M$, which is an AP for controlling the mobile cell, and communicates with the $AP_M$. The $AP_N$ is a home base station and the $AP_M$ is a target base station.

An $AP_Y$ is a nomadic AP adjacent to the $AP_N$, and is an AP having the largest RSS value among mobile APs adjacent to the $AP_N$. The MT monitors the APs adjacent to the $AP_N$ while communicating with the $AP_N$, and creates and manages a list of APs to which the MT may perform handoff. Accordingly, the MT stores information required when the MT performs handoff to $AP_Y$ in advance. Because storing information is apparent to those skilled in the art, a detailed description will be omitted.

If the MT moves to the mobile cell while communicating with the $AP_N$, the MT performs a registration procedure, a location registration, etc., for the $AP_M$ for controlling the mobile cell, and receives an ID and an IP address ($AP_M\_$ID/IP address) of the $AP_M$ in step S902. The MT transmits a registration update message or a location registration update message for updating a registration procedure, a location registration, etc., to the $AP_N$ for controlling the nomadic cell in step S904. The registration update message or the location registration update message includes a VHO_flag, the ID and the IP address ($AP_M\_$ID/IP address) of the $AP_M$ received in step S902, and information MM_type for types of handoff protocols, differently from a general registration update message or a general location registration update message. The VHO_flag represents that the MT performs the handoff from the mobile AP to the nomadic AP.

The $AP_N$ inserts bicasting information bicast_flag, data transfer time information $T_{MN}$ between the $AP_M$ and the $AP_N$, VHO signaling execution time information $T_{VHO\_signaling}$, and average data transmission time information $T_{air}$ between the $AP_N$ and the MT, which are necessary for computing the execution time period $T_t$ of VHO, into a registration update response message or a location registration update response message, which includes an ID and an IP address ($AP_N\_$ID/IP address) of the $AP_N$, and transmits the registration update response message or the location registration update response message to the MT in step S906.

The MT computes a time period $T_t$ by means of the information received in step S906, and computes an $RSS_{VHO}$ by means of the time period $T_t$ in step S908. Further, the MT performs an initialization process for the handoff by means of the $RSS_{VHO}$ and RSS values of APs in step S910. Herein, if the MT determines that HHO is necessary for the handoff, the MT performs the HHO to the $AP_Y$ adjacent to the $AP_N$ using the previously stored information in step S912. However, if the MT determines that VHO is necessary, the MT performs the VHO to the $AP_M$ in step S914.

Because step S908, i.e., a process for computing the time period $T_t$ and the $RSS_{VHO}$ is equal to the embodiments as described above, a detailed description will be omitted.

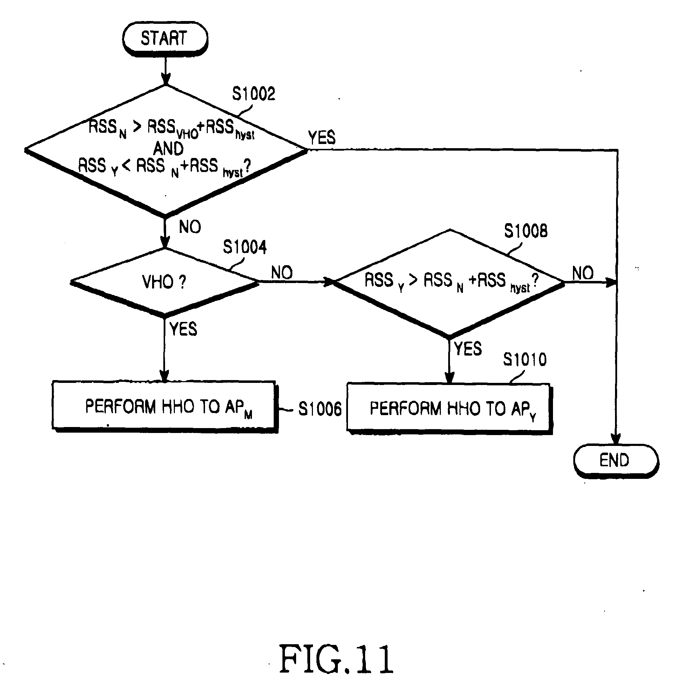

FIG 11 is a detailed flow diagram illustrating an initialization processes for the handoff illustrated in FIG 10. In FIG 11, the MT compares the current RSS value ($RSS_N$) of the $AP_N$, the current RSS value ($RSS_Y$) of the $AP_Y$, and the $RSS_{VHO}$ to one another in step 51002). More specifically, the MT determines if $RSS_N$ is larger than ($RSS_{VHO}$ + $RSS_{hyst}$) and $RSS_Y$ is smaller than ($RSS_N$ + $RSS_{hyst}$).

If $RSS_N$ is not larger than ($RSS_{VHO}$ + $RSS_{hyst}$) and $RSS_Y$ is not smaller than ($RSS_N$ + $RSS_{hyst}$), the MT determines whether to perform the VHO in step S1004. If the MT determines that it is necessary to perform the VHO, the MT performs the VHO to the $AP_M$ in step S1006. Herein, step S1006 represents step S914 in FIG. 10.

However, if the MT determines that it is not necessary to perform the VHO in step S1004, the MT compares the $RSS_Y$ with the $RSS_N$ in step S1008. If $RSS_Y$ is larger than ($RSS_N$ + $RSS_{hyst}$), the MT performs the HHO to the $AP_Y$ in step S1010. Herein, step S1010 represents step S912 in FIG. 10.

According to the present invention as described above, in a handoff, the execution time period $T_t$ of VHO is computed using both ID and IP address information of a corresponding base station and a partner base station, and information for types of handoff protocols for IP mobility support, and an $RSS_{VHO}$ is computed, such that a time of the handoff is determined.

According to the present invention as described above, information regarding the execution time period of handoff is received from a base station, such that the handoff can be performed without delay.

Further, the information regarding the execution time period of the handoff is received from the base station, so that a time point of the handoff can be adaptively determined according to movement of an MT for cellular environments in which various wireless access networks overlap. Accordingly, it is possible to perform the handoff very efficiently.

Furthermore, the present invention can be executed as software in the existing MT and base stations, so that it is very efficient to realize a system.

Moreover, the present invention can efficiently provide services to an MT without interruption.

While the present invention has been shown and described with reference to certain preferred embodiments thereof, it will be understood by those skilled in the art that various changes in form and details may be made therein without departing from the scope of the present invention as defined by the appended claims.

**Claims**

1. A method for determining an execution time of a vertical handoff between base stations having different wireless interfaces in a handoff among Internet Protocol, IP, -based wireless access networks, the method comprising the steps of:

   computing an execution time period of the vertical handoff using identification information of the base stations, types of handoff protocols used to support IP mobility among the base stations, a method for transferring data among the base stations, and transmission/reception mode information of a multi-mode Mobile Terminal, MT;
   computing, by the multi-mode MT, first Received Signal Strength, RSS, information using the computed time period, the first RSS information representing an RSS threshold value of a home base station based on which the handoff must be performed before a link from the multi-mode MT to the home base station among the base stations is down; and
   determining the execution time of the handoff, including an initialization process for determining to perform the handoff using both the first RSS information and RSS information values of the base stations.

2. The method as claimed in claim 1, wherein, when a transmission/reception mode of the multi-mode MT is a reception mode, the execution time period of the vertical handoff is computed using:

$$T_t = \mathrm{Max} \{a\, T_{MN} + (1\text{-}a)\, T_{VHO\_signaling} + T_{air}, T\},$$

   where $T_t$ represents the execution time period of the vertical handoff, $T_{MN}$ represents a data transfer time between the base stations, $T_{VHO\_signaling}$ represents a handoff signaling execution time between the base stations, $T_{air}$ represents an average data transmission time between a target base station and the multi-mode MT, T represents an average time value required when the multi-mode MT performs a horizontal handoff, and "a" represents a constant that has a value of 1, if the home base station performs bicasting, or which has a value of 0, if the home base station does not perform the bicasting when the method for transferring data among the base stations corresponds to the bicasting.

3. The method as claimed in claim 1, wherein, when a transmission/reception mode of the multi-mode MT is a transmission mode, the execution time period of the vertical handoff is computed using:

$$T_t = \mathrm{Max} \{ T_{VHO\_signaling} + T_{air}, T\},$$

   where $T_t$ represents the execution time period of the vertical handoff, $T_{VHO\_signaling}$ represents a handoff signaling execution time between the base stations, $T_{air}$ represents an average data transmission time between a target base station and the MT, and T represents an average time value required when the MT performs a horizontal handoff.

4. The method as claimed in claim 3, wherein the first RSS information is computed using:

$$RSS_{VHO} = \delta \quad T_t / T_{measureperiod} + RSS_{LD},$$

where $RSS_{VHO}$ represents the first RSS information, $T_t$ represents the execution time period of the vertical handoff, $T_{measureperiod}$ represents a computation period of an average value for RSS measured values for the base stations, $\delta$ represents a variation of an RSS value during the $T_{measureperiod}$ interval, and $RSS_{LD}$ represents an RSS value at which a link from the MT to the home base station is down.

5. The method as claimed in claim 4, wherein the initialization process comprises the steps of:

determining a speed of the multi-mode MT;
when the multi-mode MT has a speed lower than a threshold speed of the multi-mode MT, comparing the first RSS information, the RSS information values of the base stations, and second RSS information to one another, the second RSS information representing a minimum RSS threshold value of the target base station used when the multi-mode MT accesses the target base station and communicates with the target base station;
determining whether to perform the handoff when RSS information corresponding to the target base station from among the RSS information values of the base stations is larger than a value obtained by adding a predetermined margin to the second RSS information, and when RSS information corresponding to the home base station from among the RSS information values of the base stations is larger than a value obtained by adding a predetermined margin to the first RSS information;
performing the handoff when it is determined that it is necessary;
comparing third RSS information with the RSS information corresponding to the home base station when the RSS information corresponding to the target base station is not higher than the value obtained by adding the predetermined margin to the second RSS information, and when the RSS information corresponding to the home base station is not larger than the value obtained by adding the predetermined margin to the first RSS information, the third RSS information representing an RSS value of a third base station having largest amplitude of signals from among multiple base stations that are adjacent to the home base station and have an interface equal to an interface of the home base station; and
performing horizontal handoff between the home base station and the third base station when the third RSS information is larger than a value obtained by adding a predetermined margin to the RSS information corresponding to the home base station.

6. The method as claimed in claim 4, wherein the initialization process comprises the steps of:

determining whether to perform the handoff when the RSS information corresponding to the home base station from among the RSS information values of the base stations is not larger than a value obtained by adding a predetermined margin to the first RSS information, and when fourth RSS information is not smaller than a value obtained by adding a predetermined margin to the RSS information corresponding to the home base station, the fourth RSS information representing an RSS value of a fourth base station having a largest amplitude of signals from among multiple base stations that are adjacent to the home base station and have an interface equal to an interface of the home base station;
performing the handoff when it is determined that it is necessary; and
performing horizontal handoff between the home base station and the fourth base station when it is not determined that it is necessary to perform the handoff and when the fourth RSS information is larger than the value obtained by adding the predetermined margin to the RSS information corresponding to the home base station.

7. The method as claimed in claim 2, wherein the first RSS information is computed using:

$$RSS_{VHO} = \delta \quad T_t / T_{measureperiod} + RSS_{LD},$$

where $RSS_{VHO}$ represents the first RSS information, $T_t$ represents the execution time period of the vertical handoff, $T_{measureperiod}$ represents a computation period of an average value for RSS measured values for the base stations, $\delta$ represents a variation of an RSS value during the $T_{measureperiod}$ interval, and $RSS_{LD}$ represents an RSS value at which a link from the MT to the home base station is down.

8. The method as claimed in claim 7, wherein the initialization process comprises the steps of:

determining a speed of the multi-mode MT;

when the multi-mode MT has a speed lower than a threshold speed of the multi-mode MT, comparing the first RSS information, the RSS information values of the base stations, and second RSS information to one another, the second RSS information representing a minimum RSS threshold value of the target base station used when the multi-mode MT accesses the target base station and communicates with the target base station;

determining whether to perform the handoff when RSS information corresponding to the target base station from among the RSS information values of the base stations is larger than a value obtained by adding a predetermined margin to the second RSS information, and when RSS information corresponding to the home base station from among the RSS information values of the base stations is larger than a value obtained by adding a predetermined margin to the first RSS information;

performing the handoff when it is determined that it is necessary;

comparing third RSS information with the RSS information corresponding to the home base station when the RSS information corresponding to the target base station is not higher than the value obtained by adding the predetermined margin to the second RSS information, and when the RSS information corresponding to the home base station is not larger than the value obtained by adding the predetermined margin to the first RSS information, the third RSS information representing an RSS value of a third base station having largest amplitude of signals from among multiple base stations that are adjacent to the home base station and have an interface equal to an interface of the home base station; and

performing horizontal handoff between the home base station and the third base station when the third RSS information is larger than a value obtained by adding a predetermined margin to the RSS information corresponding to the home base station.

9. The method as claimed in claim 7, wherein the initialization process comprises the steps of:

determining whether to perform the handoff when the RSS information corresponding to the home base station from among the RSS information values of the base stations is not larger than a value obtained by adding a predetermined margin to the first RSS information, and when fourth RSS information is not smaller than a value obtained by adding a predetermined margin to the RSS information corresponding to the home base station, the fourth RSS information representing an RSS value of a fourth base station having a largest amplitude of signals from among multiple base stations that are adjacent to the home base station and have an interface equal to an interface of the home base station;

performing the handoff when it is determined that it is necessary; and

performing horizontal handoff between the home base station and the fourth base station when it is not determined that it is necessary to perform the handoff and when the fourth RSS information is larger than the value obtained by adding the predetermined margin to the RSS information corresponding to the home base station.

10. The method as claimed in claim 1, wherein the identification information of the base stations includes IDs of the base stations.

11. The method as claimed in claim 1, wherein the identification information of the base stations includes IP addresses of the base stations.

12. The method as claimed in claim 1, wherein the handoff protocol includes an L2 protocol.

13. The method as claimed in claim 1, wherein the handoff protocol includes a Mobile Internet Protocol, MIP, for supporting micro mobility.

14. The method as claimed in claim 1, wherein the handoff protocol includes an MIP for supporting macro mobility.

15. The method as claimed in claim 1, wherein the handoff protocol includes a Session Initiation Protocol, SIP.

16. A method for determining an execution time of a vertical handoff between base stations having different wireless interfaces in a handoff among Internet Protocol, IP, -based wireless access networks, the method comprising the steps of:

transmitting, by a base station, predetermined information to a multi-mode Mobile Terminal, MT, and requesting the MT to perform the handoff, the predetermined information including information for bicasting, which represents a method for transferring data among the base stations, information for an execution time period of the vertical handoff, identification information of partner base stations for the base station, and information for types of handoff protocols used in order to support IP mobility among the base stations;

computing, by the multi-mode MT, first Received Signal Strength, RSS, information using the execution time period of the vertical handoff, the first RSS information representing an RSS threshold value of a home base station based on which the handoff must be performed before a link from the multi-mode MT to the home base station among the base stations is down; and

determining, by the multi-mode MT, the execution time of the handoff, including an initialization process for determining to perform the handoff using both the first RSS information and RSS information values of the base stations.

17. The method as claimed in claim 16, wherein, when a transmission/reception mode of the multi-mode MT is a reception mode, the execution time period of the vertical handoff is computed using:

$$T_t = \mathrm{Max}\ \{a\ T_{MN} + (1\text{-}a)\ T_{VHO\_signaling} + T_{air},\ T\},$$

where $T_t$ represents the execution time period of the vertical handoff, $T_{MN}$ represents a data transfer time between the base stations, $T_{VHO\_signaling}$ represents a handoff signaling execution time between the base stations, $T_{air}$ represents an average data transmission time between a target base station and the multi-mode MT, T represents an average time value required when the multi-mode MT performs a horizontal handoff, and "a" represents a constant that has a value of 1, if the home base station performs bicasting, or that has a value of 0, if the home base station do not perform the bicasting when the method for transferring data among the base stations corresponds to the bicasting.

18. The method as claimed in claim 16, wherein, when a transmission/reception mode of the multi-mode MT is a transmission mode, the execution time period of the vertical handoff is computed using:

$$T_t = \mathrm{Max}\ \{\ T_{VHO\_signaling} + T_{air},\ T\},$$

where $T_t$ represents the execution time period of the vertical handoff, $TV_{HO\_signaling}$ represents a handoff signaling execution time between the base stations, $T_{air}$ represents an average data transmission time between a target base station and the multi-mode MT, and T represents an average time value required when the MT performs a horizontal handoff.

19. The method as claimed in claim 18, wherein the first RSS information is computed using:

$$RSS_{VHO} = \delta\ T_t / T_{measureperiod} + RSS_{LD},$$

where $RSS_{VHO}$ represents the first RSS information, $T_t$ represents the execution time period of the vertical handoff, $T_{measureperiod}$ represents a computation period of an average value for RSS measured values for the base stations, $\delta$ represents a variation of an RSS value during the $T_{measureperiod}$ interval, and $RSS_{LD}$ represents an RSS value at which a link from the multi-mode MT to the home base station is down.

20. The method as claimed in claim 19, wherein the initialization process comprises the steps of:

determining a speed of the multi-mode MT;
when the multi-mode MT has a speed smaller than a threshold value of the speed of the multi-mode MT, comparing the first RSS information, the RSS information values of the base stations, and second RSS information to one another, the second RSS information representing a minimum RSS threshold value of the target base station used when the multi-mode MT accesses the target base station and communicates with the target base station;

determining whether to perform the handoff when RSS information corresponding to the target base station from among the RSS information values of the base stations is larger than a value obtained by adding a predetermined margin to the second RSS information, and when RSS information corresponding to the home base station from among the RSS information values of the base stations is larger than a value obtained by adding a predetermined margin to the first RSS information;

performing the handoff when it is determined that it is necessary;

comparing third RSS information with the RSS information corresponding to the home base station when the RSS information corresponding to the target base station is not larger than the value obtained by adding the predetermined margin to the second RSS information, and when the RSS information corresponding to the home base station is not larger than the value obtained by adding the predetermined margin to the first RSS information, the third RSS information representing an RSS value of a third base station having largest amplitude of signals from among multiple base stations that are adjacent to the home base station and have an interface equal to an interface of the home base station; and

performing a horizontal handoff between the home base station and the third base station when the third RSS information is larger than a value obtained by adding a predetermined margin to the RSS information corresponding to the home base station.

**21.** The method as claimed in claim 19, wherein the initialization process comprises the steps of:

determining whether to perform the handoff when the RSS information corresponding to the home base station from among the RSS information values of the base stations is not larger than a value obtained by adding a predetermined margin to the first RSS information, and when fourth RSS information is not smaller than a value obtained by adding a predetermined margin to the RSS information corresponding to the home base station, the fourth RSS information representing an RSS value of a fourth base station having largest amplitude of signals from among multiple base stations that are adjacent to the home base station and have an interface equal to an interface of the home base station;

performing the handoff when it is determined that it is necessary; and

performing a horizontal handoff between the home base station and the fourth base station when it is not determined that it is necessary to perform the handoff and when the fourth RSS information is larger than the value obtained by adding the predetermined margin to the RSS information corresponding to the home base station.

**22.** The method as claimed in claim 17, wherein the first RSS information is computed using:

$$RSS_{VHO} = \delta \quad T_t / T_{measureperiod} + RSS_{LD},$$

where $RSS_{VHO}$ represents the first RSS information, $T_t$ represents the execution time period of the vertical handoff, $T_{measureperiod}$ represents a computation period of an average value for RSS measured values for the base stations, $\delta$ represents a variation of an RSS value during the $T_{measureperiod}$ interval, and $RSS_{LD}$ represents an RSS value at which a link from the multi-mode MT to the home base station is down.

**23.** The method as claimed in claim 22, wherein the initialization process comprises the steps of:

determining a speed of the multi-mode MT;

when the multi-mode MT has a speed smaller than a threshold value of the speed of the multi-mode MT, comparing the first RSS information, the RSS information values of the base stations, and second RSS information to one another, the second RSS information representing a minimum RSS threshold value of the target base station used when the multi-mode MT accesses the target base station and communicates with the target base station;

determining whether to perform the handoff when RSS information corresponding to the target base station from among the RSS information values of the base stations is larger than a value obtained by adding a predetermined margin to the second RSS information, and when RSS information corresponding to the home base station from among the RSS information values of the base stations is larger than a value obtained by adding a predetermined margin to the first RSS information;

performing the handoff when it is determined that it is necessary;

comparing third RSS information with the RSS information corresponding to the home base station when the RSS information corresponding to the target base station is not larger than the value obtained by adding the predetermined margin to the second RSS information, and when the RSS information corresponding to the home base station is not larger than the value obtained by adding the predetermined margin to the first RSS information, the third RSS information representing an RSS value of a third base station having largest amplitude of signals from among multiple base stations that are adjacent to the home base station and have an interface equal to an interface of the home base station; and

performing a horizontal handoff between the home base station and the third base station when the third RSS information is larger than a value obtained by adding a predetermined margin to the RSS information corresponding to the home base station.

24. The method as claimed in claim 22, wherein the initialization process comprises the steps of:

determining whether to perform the handoff when the RSS information corresponding to the home base station from among the RSS information values of the base stations is not larger than a value obtained by adding a predetermined margin to the first RSS information, and when fourth RSS information is not smaller than a value obtained by adding a predetermined margin to the RSS information corresponding to the home base station, the fourth RSS information representing an RSS value of a fourth base station having largest amplitude of signals from among multiple base stations that are adjacent to the home base station and have an interface equal to an interface of the home base station;

performing the handoff when it is determined that it is necessary; and

performing a horizontal handoff between the home base station and the fourth base station when it is not determined that it is necessary to perform the handoff and when the fourth RSS information is larger than the value obtained by adding the predetermined margin to the RSS information corresponding to the home base station.

25. The method as claimed in claim 13, wherein the identification information of the base stations includes IDs of the base stations.

26. The method as claimed in claim 13, wherein the identification information of the base stations includes IP addresses of the base stations.

27. The method as claimed in claim 13, wherein the handoff protocol includes an L2 protocol.

28. The method as claimed in claim 13, wherein the handoff protocol includes a Mobile Internet Protocol, MIP, for supporting micro mobility.

29. The method as claimed in claim 13, wherein the handoff protocol includes an MIP for supporting macro mobility.

30. The method as claimed in claim 13, wherein the handoff protocol includes a Session Initiation Protocol, SIP.

31. A method for determining an execution time of a vertical handoff between a first base station and a second base station, which have different wireless interfaces, in a handoff among Internet Protocol, IP, -based wireless access networks, the method comprising the steps of:

transmitting, by a multi-mode Mobile Terminal, MT, predetermined information to the first base station, the predetermined information including identification information of the second base station, and information for types of handoff protocols used to support IP mobility of the multi-mode MT among the IP-based networks;

exacting, by the first base station, first time information, second time information, third time information, and bicasting information with reference to the identification information of the second base station and information for the types of the handoff protocols of the multi-mode MT, and transmitting the extracted information to the multi-mode MT, the first base station first time information representing a data transfer time information between the first base station and the second base station, the second time information representing information on a time period for which handoff signaling is to be performed between the first base station and the second base station, the third time information representing an average data transmission time information between the multi-mode MT and a base station, which corresponds to a target base station of the first base station and the second base station, and the bicasting information representing bicasting information of a base station, which corresponds to a home base station of the first base station and the second base station;

computing, by the multi-mode MT, fourth time information with reference to transmission mode information, the first time information, the second time information, the third time information, and the bicasting information, the transmission mode information representing whether the multi-mode MT is in a transmission mode or in a reception mode, the fourth time information representing an execution time period of the handoff between the first base station and the second base station;

computing, by the multi-mode MT, first Received Signal Strength, RSS, information with reference to the fourth time information, the first RSS information representing an RSS threshold value of the home base station based on which the handoff must be performed before a link from the multi-mode MT to the base station is down, which corresponds to the home base station of the first base station and the second base station, is down; and

determining, by the multi-mode MT, the execution time of the handoff, including an initialization process for determining to perform the handoff with reference to the first RSS information, second RSS information representing an RSS value of the first base station, and third RSS information representing an RSS value of the second base station.

**32.** The method as claimed in claim 31, wherein, when the first base station is a nomadic base station, the multi-mode MT further transmits a flag to the first base station together with the identification information of the second base station, and the information for the types of the handoff protocols, the flag representing that the multi-mode MT attempts to connect to the nomadic base station, and

the first base station further transmits identification information of the first base station to the multi-mode MT together with the first time information, the second time information, the third time information, and the bicasting information.

**33.** The method as claimed in claim 32, wherein the identification information of the first base station and the identification information of the second base station include IDs of the base stations.

**34.** The method as claimed in claim 32, wherein the identification information of the first base station and the identification information of the second base station include IP addresses of the base stations.

**35.** The method as claimed in claim 31, wherein, when the transmission mode information represents a reception mode, the fourth time information is computed using:

$$T_t = \text{Max} \{a\, T_{MN} + (1\text{-}a)\, T_{VHO\_signaling} + T_{air}, T\},$$

where $T_t$ represents the fourth time information, $T_{MN}$ represents the first time information, $T_{VHO\_signaling}$ represents the second time information, $T_{air}$ represents the third time information, $T$ represents an average time value required when the multi-mode MT performs a horizontal handoff, and "a" represents a constant that has a value of 1, when the home base station performs bicasting according to the bicasting information, or that has a value of 0, when the home base station do not perform the bicasting.

**36.** The method as claimed in claim 31, wherein, when the transmission mode information represents a transmission mode, the fourth time information is computed using:

$$T_t = \text{Max} \{ T_{VHO\_signaling} + T_{air}, T\},$$

where $T_t$ represents the fourth time information, $T_{VHO\_signaling}$ represents the second time information, $T_{air}$ represents the third time information, and $T$ represents an average time value required when the multi-mode MT performs a horizontal handoff.

**37.** The method as claimed in claim 36, wherein the first RSS information is computed using:

$$RSS_{VHO} = \delta \quad T_t / T_{measureperiod} + RSS_{LD},$$

where $RSS_{VHO}$ represents the first RSS information, $T_t$ represents the fourth time information, $T_{measureperiod}$ represents a computation period of an average value for RSS measured values for the base stations, $\delta$ represents a

variation of an RSS value during the $T_{measureperiod}$ interval, and $RSS_{LD}$ represents an RSS value at which a link of the multi-mode MT to the home base station is down.

**38.** The method as claimed in claim 37, wherein the initialization process comprises the steps of:

determining a speed of the multi-mode MT;
when the multi-mode MT has a speed lower than a threshold speed of the multi-mode MT, comparing the first RSS information, the second RSS information, the third RSS information, and the fourth RSS information, the fourth RSS information which represents a minimum RSS threshold value of the target base station used when the multi-mode MT accesses the target base station and communicates with the target base station;
determining whether to perform the handoff when RSS information corresponding to the target base station of the second RSS information and the third RSS information is larger than a value obtained by adding a predetermined margin to the fourth RSS information, and when RSS information corresponding to the home base station of the second RSS information and the third RSS information is larger than a value obtained by adding a predetermined margin to the first RSS information;
performing the handoff when it is determined that it is necessary;
when the RSS information corresponding to the target base station of the second RSS information and the third RSS information is not larger than the value obtained by adding the predetermined margin to the fourth RSS information, and when the RSS information corresponding to the home base station of the second RSS information and the third RSS information is not larger than the value obtained by adding the predetermined margin to the first RSS information, comparing fifth RSS information with the RSS information corresponding to the home base station of the second RSS information and the third RSS information, the fifth RSS information representing an RSS value of a third base station having largest amplitude of signals from among multiple base stations that are adjacent to the home base station and have an interface equal to an interface of the home base station; and
performing a horizontal handoff between the home base station and the third base station when the fifth RSS information is larger than a value obtained by adding a predetermined margin to the RSS information corresponding to the home base station of the second RSS information and the third RSS information.

**39.** The method as claimed in claim 37, wherein the initialization process comprises the steps of:

determining whether to perform the handoff when RSS information corresponding to the home base station of the second RSS information and the third RSS information is not larger than a value obtained by adding a predetermined margin to the first RSS information, and when six RSS information is not smaller than a value obtained by adding a predetermined margin to the RSS information corresponding to the home base station of the second RSS information and the third RSS information, the six RSS information representing a current RSS value of a fourth base station having largest amplitude of signals from among multiple base stations that are adjacent to the home base station and have an interface equal to an interface of the home base station;
performing the handoff when it is determined that it is necessary; and
performing horizontal handoff between the home base station and the fourth base station when it is not determined that it is necessary to perform the handoff and when the six RSS information is larger than the value obtained, by adding the predetermined margin to the RSS information corresponding to the home base station of the second RSS information and the third RSS information.

**40.** The method as claimed in claim 35, wherein the first RSS information is computed using:

$$RSS_{VHO} = \delta \quad T_t / T_{measureperiod} + RSS_{LD},$$

where $RSS_{VHO}$ represents the first RSS information, $T_t$ represents the fourth time information, $T_{measureperiod}$ represents a computation period of an average value for RSS measured values for the base stations, $\delta$ represents a variation of an RSS value during the $T_{measureperiod}$ interval, and $RSS_{LD}$ represents an RSS value at which a link of the multi-mode MT to the home base station is down.

**41.** The method as claimed in claim 40, wherein the initialization process comprises the steps of:

determining a speed of the multi-mode MT;

when the multi-mode MT has a speed lower than a threshold speed of the multi-mode MT, comparing the first RSS information, the second RSS information, the third RSS information, and the fourth RSS information, the fourth RSS information which represents a minimum RSS threshold value of the target base station used when the multi-mode MT accesses the target base station and communicates with the target base station;

determining whether to perform the handoff when RSS information corresponding to the target base station of the second RSS information and the third RSS information is larger than a value obtained by adding a predetermined margin to the fourth RSS information, and when RSS information corresponding to the home base station of the second RSS information and the third RSS information is larger than a value obtained by adding a predetermined margin to the first RSS information;

performing the handoff when it is determined that it is necessary;

when the RSS information corresponding to the target base station of the second RSS information and the third RSS information is not larger than the value obtained by adding the predetermined margin to the fourth RSS information, and when the RSS information corresponding to the home base station of the second RSS information and the third RSS information is not larger than the value obtained by adding the predetermined margin to the first RSS information, comparing fifth RSS information with the RSS information corresponding to the home base station of the second RSS information and the third RSS information, the fifth RSS information representing an RSS value of a third base station having largest amplitude of signals from among multiple base stations that are adjacent to the home base station and have an interface equal to an interface of the home base station; and

performing a horizontal handoff between the home base station and the third base station when the fifth RSS information is larger than a value obtained by adding a predetermined margin to the RSS information corresponding to the home base station of the second RSS information and the third RSS information.

**42.** The method as claimed in claim 40, wherein the initialization process comprises the steps of:

determining whether to perform the handoff when RSS information corresponding to the home base station of the second RSS information and the third RSS information is not larger than a value obtained by adding a predetermined margin to the first RSS information, and when six RSS information is not smaller than a value obtained by adding a predetermined margin to the RSS information corresponding to the home base station of the second RSS information and the third RSS information, the six RSS information representing a current RSS value of a fourth base station having largest amplitude of signals from among multiple base stations that are adjacent to the home base station and have an interface equal to an interface of the home base station;

performing the handoff when it is determined that it is necessary; and

performing horizontal handoff between the home base station and the fourth base station when it is not determined that it is necessary to perform the handoff and when the six RSS information is larger than the value obtained, by adding the predetermined margin to the RSS information corresponding to the home base station of the second RSS information and the third RSS information.

**43.** The method as claimed in claim 31, wherein the handoff protocol includes an L2 protocol.

**44.** The method as claimed in claim 31, wherein the handoff protocol includes a Mobile Internet Protocol, MIP, for supporting micro mobility.

**45.** The method as claimed in claim 31, wherein the handoff protocol includes an MIP for supporting macro mobility.

**46.** The method as claimed in claim 31, wherein the handoff protocol includes a Session Initiation Protocol, SIP.

FIG.1

FIG.2

EP 1 679 928 A2

START

COMPUTE EXECUTION TIME PERIOD OF VHO — S302

COMPUTE RSS VALUE AT WHICH VHO
MUST BE PERFORMED — S304

INITIALIZE AND PERFORM VHO — S306

COMPLETE VHO — S308

END

FIG.3

FIG.4

EP 1 679 928 A2

MT     $AP_M$     $AP_X$     $AP_N$

communicating

— S420

. . .

VHO request for $AP_M$

(bicast_flag, $T_I$ ,$AP_M$_ID/IP address, MM_type, ...)   — S422

COMPUTE $RSS_{VHO}$ — S424

— S426

VHO | INITIALIZE HANDOFF | HHO

— S428

PERFORM HHO

— S430

PERFORM VHO

FIG.5

EP 1 679 928 A2

FIG.6

MT      AP$_M$      AP$_X$      AP$_N$

Registered & location updated (AP$_M$_ ID/IP address) — S602

Registration msg (VHO_flag, AP$_M$_ID, MM_type, ...) — S604

Registration response msg (bicast_flag, T$_{MN}$, T$_{VHC\_signaling}$, T$_{air}$, AP$_N$_ID, ...) — S606

COMPUTE T$_i$, RSS$_{VHO}$ — S608

S610

VHO | INITIALIZE HANDOFF | HHO

S612 PERFORM HHO

S614 PERFORM VHO

FIG.7

FIG.8

FIG.9

FIG.10

EP 1 679 928 A2

START

S1002

$RSS_N > RSS_{VHO} + RSS_{hyst}$
AND
$RSS_Y < RSS_N + RSS_{hyst}$?

YES

NO

S1004

VHO ?

NO

S1008

$RSS_Y > RSS_N + RSS_{hyst}$?

NO

YES

YES

S1010

PERFORM HHO TO $AP_M$

S1006

PERFORM HHO TO $AP_Y$

END

# FIG.11